# EUROPÄISCHE PATENTSCHRIFT

(11) **EP 0 383 103 B1**
(45) Veröffentlichungstag und Bekanntmachung des Hinweises auf die Patenterteilung: **04.05.1994**
(21) Anmeldenummer: 90101964.6
(22) Anmeldetag: 01.02.1990
(51) Int. Cl.: B32B 15/01, B32B 15/18, B32B 31/12, C23C 8/20, C23C 8/24, C23C 8/06, B23K 20/16, C21D 9/52, C21D 1/74

(54) **Verfahren zur Herstellung eines hochfesten und zähen metallischen Schichtverbundwerkstoffes**
Process for the production of a high-strength and tough metal composite material
Procédé pour la fabrication d'un matériau composite métallique tenace à résistance élevée

(30) Priorität: 17.02.1989 DE 3904776
(43) Veröffentlichungstag der Anmeldung: 22.08.1990
(73) Patentinhaber: VEREINIGTE SCHMIEDEWERKE GMBH, D-44793 Bochum (DE)
(72) Erfinder: Feichtinger, Prof. Dr. Heinrich K., CH-8128 Hinteregg (CH); Stein, Gerald, Dipl.-Ing., D-4300 Essen 1 (DE); Speidel, Prof. Dr.-Ing. Marcus O., CH-5413 Birnenstorf (CH); Menzel, Joachim, Dr.-Ing., D-4300 Essen 1 (DE)
(74) Vertreter: Cohausz & Florack Patentanwälte

(56) Entgegenhaltungen:
- EP-A- 156 378
- DE-A- 2 932 644
- DE-A- 3 604 440
- DE-A- 3 607 699
- DE-B- 2 009 699
- DE-B- 2 020 569
- DE-B- 2 658 549
- DE-C- 2 358 292
- US-A- 4 710 238
- Handbuch der Fertigungstechnik, Carl Hanser Verlag München/Wien (1987), S. 854-861

## Beschreibung

Die Erfindung bezieht sich auf ein Verfahren zur Herstellung eines hochfesten und zähen metallischen Schichtverbundwerkstoffes aus mehreren miteinander durch Diffusionsverschweißen verbundenen Metallschichten.

Metallische Schichtverbundwerkstoffe bestehen aus zwei oder mehreren miteinander verbundenen Metall schichten, die als Komponenten bezeichnet werden. Die dem Volumen oder Gewicht nach überwiegende Komponente wird als Grund- oder Unterlagewerkstoff, die übrigen Komponenten werden je nach Lage und Anordnung als Plattier-, Auflage-, Einlage- oder Zwischenlagewerkstoff bezeichnet.

Die Kombination geeigneter Metalle und Legierungen in Verbindung mit der Wahl geeigneter Schichtdicken und der relativen Lage der Komponenten im Verbund gestattet die Herstellung einer fast unbegrenzten Anzahl von Schichtverbundwerkstoffen mit definierten physikalischen, chemischen und technologischen Eigenschaften.
Typische Beispiele von Schichtverbundwerkstoffen sind aus Gründen des Korrosionsschutzes mit Schutzschichten aus korrosions- und hitzebeständigen Stählen, NE-Metallen und Edelmetallen "plattierte" unlegierte und niedriglegierte Stähle, die bei hohen chemischen, mechanischen und thermischen Beanspruchungen sonst entsprechend stark zu dimensionierende Bauteile aus Stählen, NE-Metallen oder Edelmetallen in wirtschaftlicher Weise ersetzen.

Der preiswerte Grundwerkstoff aus unlegiertem oder niedriglegiertem Stahl übernimmt hier die mechanische Belastung, während die chemische und/oder thermische Belastung durch den aufplattierten Werkstoff übernommen wird.
Hergestellt werden metallische Schichtverbundwerkstoffe vorwiegend durch Verfahren, bei denen die einzelnen Metallschichten in fester Phase miteinander unter erhöhter Temperatur durch Druck verbunden werden, wobei jede Schichtkomponente ihre ursprünglichen Eigenschaften beibehält. Solche Verfahren sind das Preßschweissen, das Walzplattieren und das Sprengplattieren. In neuerer Zeit wird - insbesondere bei kompliziert geformten Bauteilen - das heißisostatische Pressen (HIP-Verfahren) zur Herstellung von metallischen Schichtverbundwerkstoffen angewendet, bei dem die Metallkomponenten mit einer gasdichten verformbaren Hülle umgeben und bei so hoch gewählten Temperaturen, daß eine ausreichende Diffusion der Komponenten ineinander eintreten kann, durch auf die Außenwand der Hülle einwirkende Gase hohen Drucks miteinander verbunden (diffusionsverschweißt) werden.

Die Festigkeitswerte (Zugfestigkeit, Streckgrenze) eines Bauteils aus metallischen Schichtverbundwerkstoffen ergeben sich additiv aus den entsprechenden Werten der einzelnen Schichtkomponenten.

Soll ein metallischer Schichtverbundwerkstoff, z. B. aus mehreren Stahlschichten höchster Festigkeit (größer 1 500 bis 2 500 N/mm Zugfestigkeit) hergestellt werden, müssen die einzelnen Stahlschichten bereits vor den Diffusionsverschweißen diese Werte aufweisen.
Zwar gibt es eine große Anzahl "höchstfester" Stähle, die bereits aufgrund ihres Legierungsgehaltes an festigkeitssteigernden Elementen, wie Chrom, Nickel, Kobalt, Molybdän oder auch Stickstoff im Walzzustand solche Festigkeiten aufweisen. Diese Stähle sind jedoch nur schwer verformbar, insbesondere beim Auswalzen auf dünne Abmessungen, wie Bleche oder Bänder, zur Verwendung als Schichtkomponenten. Sie haben einen hohen Formänderungswiderstand, der bei hohen Umformgraden noch ansteigt und so das Verformungsvermögen stark herabsetzt. Es müssen daher besondere Vorsichtsmaßnahmen beim Walzen solcher Stähle (Walzen in mehreren Hitzen, Einhalten sehr eng begrenzter Verformungstemperaturen) eingehalten werden, um solche höchstfesten Stähle überhaupt auf dünne Abmessungen walzen zu können, so daß ein solches Verfahren zur Herstellung stählerner Schichtkomponenten unwirtschaftlich ist.
Eine weitere Möglichkeit, höchstfeste stählerne Schichtkomponenten zum Aufbau eines Schichtverbundwerkstoffes zu schaffen, besteht darin, Stähle mit einer ein gutes Umformvermögen garantierenden Grundzusammensetzung zu dünnen Flachprodukten auszuwalzen und diese dann durch eine Vergütungsbehandlung (mit Einstellung eines martensitischen Gefüges) oder durch eine Aushärtungsbehandlung (Ausscheidung von intermetallischen Verbindungen, Karbiden, Nitridenund dergl.) auf die gewünschten Festigkeitswerte zu bringen. Einen solchen Verbundwerkstoff aus mindestens zwei miteinander durch Druck und erhöhte Temperatur verbundenen Metallschichten, wobei mindestens eine aus nitriertem, korrosionsbeständigem Stahl mit ausgeschiedenen Nitriden (Nitridstahl) besteht, beschreibt DE-B-2 009 699.
Die so erlangten Festigkeitseigenschaften würden jedoch beim nachfolgenden Verbinden der so vorbehandelten Stahlschichtkomponenten zu einem Verbundkörper durch die beim Diffusionsverschweißen notwendigen hohen Temperaturen bis 1 300°C wieder rückgängig gemacht.

Ausgehend von dem genannten Stand der Technik ist es Aufgabe der vorliegenden Erfindung, ein Verfahren zur Herstellung eines hochfesten metallischen Schichtverbundwerkstoffes aus mehreren miteinander durch Diffusionsverschweißen verbundenen Stahlschichten zu schaffen, bei dem in einfacher und wirtschaftlicher Weise die die Gesamtfestigkeit des Verbundwerkstoffes bestimmenden Festigkeitswerte der metallischen Schichtkomponenten eingestellt und auch beim Verbinden durch Diffusionsverschweißen beibehalten werden.

Gelöst wird diese Aufgabe gemäß Anspruch 1 dadurch, daß die Stahlschichten aus einem Stahl gewalzte Flachprodukte sind, die vor dem Diffusionsverschweißen durch eine Wärmebehandlung in einer ein Metalloid aus der Gruppe Stickstoff, Bor, Kohlenstoff enthaltenden Gasatmosphäre mit dem Metalloid derart auflegiert werden, daß es nur interstitiell in Lösung geht. Weitere bevorzugte Ausführungsformen des Verfahrens nach Anspruch 1 sind in den abhängigen Ansprüchen enthalten.

Zur Herstellung der einzelnen Stahlschichten können zunächst Stähle mit einer von ihrer Grundzusammensetzung her bestimmbaren niedrigeren Festigkeit als die verlangte Endfestigkeit - also mit ausreichendem Umformungsvermögen - zu Flachprodukten von nur einigen Millimetern Dicke ausgewalzt werden, z.B. in Form von Blechen oder Bändern. Die Flachprodukte werden dann einer Wärmebehandlung in einer das Metalloid enthaltenden Gasatmosphäre ausgesetzt. Bei dieser Behandlung diffundiert das Metalloid in den Grundwerkstoff, wo es interstitiell in Lösung geht, wodurch die Festigkeit des Grundwerkstoffes erhöht wird.

In Abhängigkeit von Temperatur und Dauer der Wärmebehandlung sowie den Gehalten an Legierungselementen und der Gefügeausbildung des Stahls sowie in Abhängigkeit vom Metalloidgehalt der Gasatmosphäre können auf diese Weise gezielt vorherbestimmbare Gehalte an Metalloid in den Grundwerkstoff eingebracht und gewünschte Festigkeitswerte eingestellt werden.

Die Wärmebehandlung kann so geführt werden, daß sich durchgehend über den gesamten Querschnitt der Flachprodukte eine gleichbleibende Metalloid-Konzentration einstellt, insoweit also gleiche Festigkeitswerte über den Querschnitt der Flachprodukte vorliegen.
Es ist aber auch möglich, ein vom Rand bis zum Inneren der Flachprodukte abfallendes Konzentrationsprofil entstehen zu lassen. Diese Konzentrationsprofile mit einem höheren Metalloid-Gehalt am Rand und einem niedrigeren Metalloid-Gehalt im Inneren der Flachprodukte führt nach dem Diffusionsverschweißen der Flachprodukte zu einem Schichtverbundwerkstoff mit periodischem Konzentrationsprofil des Metalloids. Es entstehen - über den Querschnitt des Verbundwerkstoffes gesehen - abwechselnd unterschiedliche, jeweils abschwellende und wieder ansteigende mechanische Eigenschaften. So können sich z. B. hochfeste mit weniger festen oder hochfeste mit hochzähen Zonen abwechseln, wodurch bei einer vorbestimmten Gesamtfestigkeit des Verbundkörpers seine Zähigkeit erhöht wird.

Das erfindungsgemäße Verfahren ist selbstverständlich nicht darauf beschränkt, daß die zur Herstellung des Schichtverbundwerkstoffes verwendeten Flachprodukte aus ein und demselben Werkstoff bestehen. Die Flachprodukte können aus verschiedenen Werkstoffen, z. B. aus Stählen verschiedener Grundzusammensetzungen, gewählt werden, welche in Verbindung mit der Zulegierung des Metalloids zu besonderen Eigenschaften in Bezug auf das mechanische Verhalten oder die Korrosionseigenschaften führen, wozu die Flachprodukte in einer Reihenfolge diffusionsverschweißt werden, welche der späteren Belastung des Werkstücks in optimaler Weise entspricht. Es können auch Flachprodukte verschiedener Dicken miteinander diffusionsverschweißt werden, wobei je nach Metalloid-Gehalt der Flachprodukte über den Querschnitt des fertigen Schichtverbundwerkstoffes unterschiedliche, dem Verwendungszweck besonders angepaßte Werkstoffeigenschaften einstellbar sind.

Vorteilhafte Verfahrensparameter zum Auflegieren von Flachprodukten aus Stahl sind Gegenstand der Ansprüche 4, 5 und 6. Beim Auflegieren mit Stickstoff wird dabei eine Gasatmosphäre aus Stickstoff und Wasserstoff, vorzugsweise in der Form von Formiergas (92 % Stickstoff, 8 % Wasserstoff) oder ein Ammoniak/Stickstoff/Wasserstoff-Gemisch verwendet.

Vorzugsweise werden die mit dem Metalloid auflegierten Flachprodukte nach dem Verfahren des heißisostatischen Pressens (HIP-Verfahren) miteinander zu einem kompakten metallischen Schichtverbundkörper diffusionsverschweißt. Um ein einwandfreies Verschweißen der einzelnen Schichtkomponenten zu gewährleisten, werden die Flachprodukte vor dem heißisostatischen Verpressen an ihren Berührungskanten miteinander gasdicht verschweißt, um während des Verpressens einen Druckaufbau zwischen den zu verbindenden Komponenten zu verhindern. Um mögliche Oxidationsvorgänge an den Oberflächen der Flachprodukte während des Verpressens zu vermeiden, werden die zwischen den Flachprodukten verbleibenden Totvolumina sowie das Totvolumen der die Flachprodukte umgebenden gasdichten verformbaren und von außen unter hoher Temperatur mit Druckgas beaufschlagten Hülle vor dem heißisostatischen Verpressen mit einem Schutzgas gefüllt.

Als Schutzgas eignet sich besonders ein während des Verdichtungsvorgangs im Werkstoff lösliches Gas, das mit dem beim Einbringen des Metalloids in die Flachprodukte verwendeten Gas identisch ist.
Anstelle einer Füllung mit Schutzgas können die Totvolumina aber auch evakuiert werden zur Vermeidung der genannten Oxidationsvorgänge.

Anstelle des heißisostatischen Pressens kann jedoch auch - in Funktion der Dimensionen des Flachprodukt-Pakets - ein Verschmiedungs- oder Verwalzungsprozess treten, wobei auch hier dafür zu sorgen ist, daß die über den Vorgang der Diffusionsverschweißung zu verbindenden-Flächen der Flachprodukte blank sind, was durch eine Evakuierung oder durch eine Füllung der Totvolumina mit im Werkstoff unter den Bedingungen des Verschweißungsprozesses lösbaren Schutzgasen erreicht wird.

Das erfindungsgemäße Verfahren eignet sich insbesondere zur Herstellung hochfester zylinderförmiger metallischer Ringkörper in Schichtverbundbauweise gemäß den Verfahrensmerkmalen des Anspruchs 10.

Von besonderem Vorteil ist die Anwendung des erfindungsgemäßen Verfahrens zur Herstellung von hochfesten Chrom-Mangan-Stahl-Kappenringen für Generatoren gemäß den Merkmalen des Anspruchs 11.

Kappenringe, die an Turbogeneratoren die Wickelköpfe gegen die durch die Drehbewegung des Rotors entstehende Fliehkraft zu halten haben, werden bislang ausschließlich aus nichtmagnetisierbaren Stählen durch Schmieden hergestellt. Der Herstellungsprozeß ist wegen der Vielzahl der hierzu nötigen Arbeitsschritte aufwendig und teuer. Ein nach dem Elektroschlackeumschmelz (ESU)-Verfahren hergestellter Vorblock wird zunächst überschmiedet.

Danach werden die für den jeweiligen Kappenring benötigten Teilgewichte (Butzen) abgehauen, wiedererwärmt, gestaucht und gelocht. Der Schmiedeprozeß wird zum Zwischenputzen unterbrochen und in zwei weiteren Hitzen durch Langschmieden, Beihalten und Aufrollen zu Ende geführt. Nach Maß- und Oberflächenkontrolle erfolgt eine spanabhebende Vorbearbeitung. Um die erforderliche Festigkeit zu erreichen, werden die vorbearbeiteten Kappenringe durch Aufweiten unter einer hydraulischen Presse kaltverfestigt, zum Abbau der beim Aufweiten auftretenden Spannungen spannungsarm geglüht und abschließend auf das Ablieferungsmaß fertig bearbeitet.
Gegenüber dem herkömmlichen bietet das erfindungsgemäße Verfahren zur Herstellung von Kappenringen beträchtliche Vorteile.

Das Band kann aus einem herkömmlich gegossenem Block bzw. aus Stranggußvormaterial gewalzt werden. Ein ESU-Umschmelzen ist nicht erforderlich.

Das Schmieden und Lochen, verbunden mit Zwischenerwärmungen und mindestens einer Zwischenbearbeitung entfallen. Die Breite des Stahlbandes kann von vornherein so gewählt werden, daß seine Breite der Ringhöhe des Kappenrings entspricht, so daß nach Aufwickeln des Stahlbandes zu einem Coil mit entsprechendem Innen- und Außendurchmesser die Endkonturen des Kappenrings bereits vorliegen (Near Net Shape).

Das erfindungsgemäße Verfahren erlaubt die Herstellung eines Kappenrings hoher Festigkeit ohne Kaltaufweiten.

Die sich nach dem herkömmlichen Verfahren nach dem Kaltaufweiten über die Breite des Kappenrings einstellende Anisotropie der Werkstoffkennwerte (beim Weiten von Ringen ist der Verformungsgrad der Wand innen größer als außen, was innen zu größerer Kaltverfestigung und damit höheren 0,2-Dehngrenzen als außen führt) entfällt beim erfindungsgemäßen Verfahren, da das in der vorhergehenden Wärmebehandlung "aufgestickte" Stahlband durch die eingebrachte Stickstoffgehalte völlig gleichmäßige Festigkeitseigenschaften aufweist, die auch nach Aufwickeln zu einem Coil und dem anschließenden heißisostatischen Verpressen der Coilwindungen zum kompakten Kappenring über die Breite des Ringes erhalten bleiben.

Ein Kaltaufweiten ist nur erforderlich, wenn im fertigen Kappenring extrem hohe Festigkeiten gefordert sind, die nicht allein durch die Aufstickbehandlung zu erzielen sind.

Selbstverständlich können auch andere geometrische Körper als Ringe in einer "Near Net Shape-Technik" hergestellt werden, indem eine Folge von individuell entsprechend geformten und ineinander passenden Flachprodukten zu einem Paket zusammengefaßt werden, sodaß ein dreidimensionaler Körper mit gewünschten Ausmassen entsteht. Dabei kann das Grundmaterial, die Dicke sowie der Gehalt an Metalloiden für jedes Flachprodukt so gewählt werden, daß insgesamt ein Körper mit optimalen Gebrauchseigenschaften entsteht. Z. B. kann ein hochwarmfester Körper so hergestellt werden, daß seine inneren Schichten aus einer abwechselnden Folge von hochfesten Blechen mit stabilen Nitriden sowie hochzähen Blechen mit homogen gelöstem Stickstoffgehalt bestehen. Das daraus resultierende Werkstück wird durch die eingebauten Nitridhaltigen Schichten gefestigt, während die hochzähen Zwischenschichten als Riß-Stopper dienen. Selbstverständlich kann eine Deckschicht als Abschluß dieser inneren Schichten verwendet werden, welche eine spezielle Korrosionsfestigkeit aufweist.

Nachfolgend wird die Erfindung anhand von Figuren und Beispielen näher erläutert:

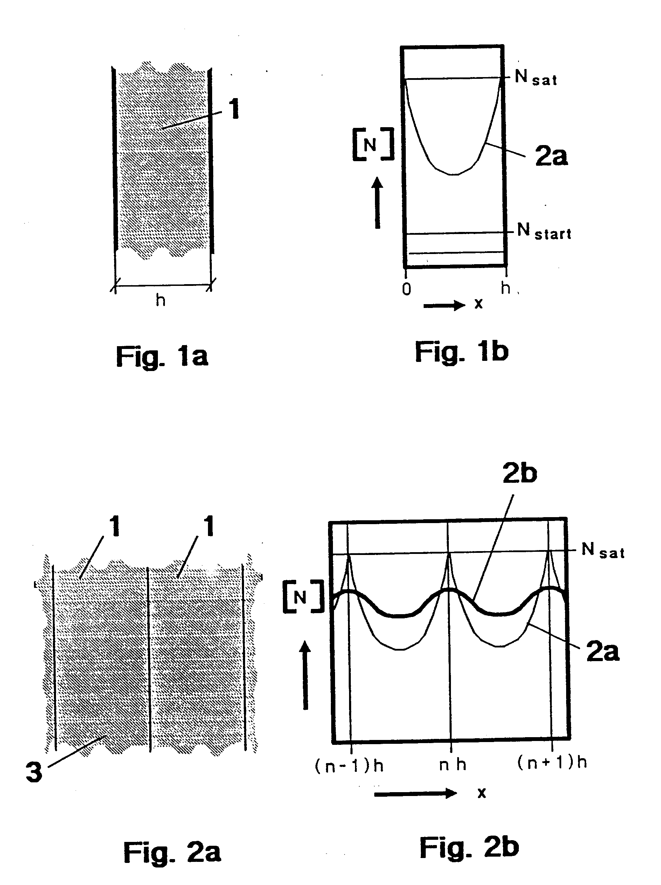

Fig. 1 a zeigt einen Querschnitt durch ein metallisches Flachprodukt 1 der Dicke h, Fig. 1 b das Stickstoffprofil 2 a, welches sich nach einer bestimmten Diffusionsdauer bei einer Wärmebehandlung des Flachproduktes in stickstoffhaltiger Atmosphäre über den Querschnitt eingestellt hat, ausgehend vom Anfangs-Stickstoffgehalt Nₛₜₐᵣₜ in Richtung auf den Sättigungsgehalt Nₛₐₜ hin. Der Diffusionsvorgang kann jedoch auch solange geführt werden, bis der gesamte Querschnitt des Flachproduktes sich praktisch auf dem Sättigungswert befindet.
Fig. 2 a zeigt die Vereinigung zweier Flachprodukte 1 zu einem Verbundstück 3, wobei die Berührungsfläche der beiden Flachprodukte möglichst guten Kontakt haben muß, damit die Diffusionsverschweißung in optimaler Weise erfolgen kann. Die Diffusionsverschweißung, welche entweder im Rahmen eines Verschmiedevorganges oder eines heißisostatischen Pressvorganges erfolgen kann, führt dann zu einem Stickstoffkonzentrationsprofil, welches in Fig. 2 b gezeigt ist: In Funktion des Verschweißungsvorganges kommt es zu einer graduellen Abflachung des ursprünglichen Konzentrationsprofils 2 a zu einem weicheren Profil 2 b. Wären die Bleche vorgängig schon bei der vollen Sättigungskonzentration gelegen, dann würde natürlich auch der aus ihnen resultierende Verbundwerkstoff eine durchgehend homogene Stickstoffkonzentration aufweisen.
   In vielen Fällen kann es günstig sein, den Stickstoffgehalt nicht in die Sättigung gehen zu lassen, da auf diese Weise ein Gradientenwerkstoff mit einer der Blechdicke entsprechenden Periodizität der Stickstoffkonzentration bzw. der sich daraus ergebenden lokalen mechanischen Eigenschaften entsteht, indem z. B. hochfeste mit weniger festen oder hochfeste mit hochzähen Zonen abwechseln.
   Für den Verdichtungs- bzw. Fügeprozess der Flachprodukte kann jeder Prozess herangezogen werden, bei dem es zu einer Diffusionsverschweißung kommt, insbesondere sind das heißisostatische Pressen sowie das Verschmieden für diesen Zweck besonders geeignet. Da beim heißisostatischen Pressen ein Druckaufbau zwischen den zu verbindenden Profilen zu verhindern ist, müssen die Profile gasdicht miteinander verbunden werden. Beim Verschmieden ist dies vor allem im Hinblick auf die Sauberkeit der Fügeflächen nötig, um z. B. Oxydationsvorgänge zu verhindern.

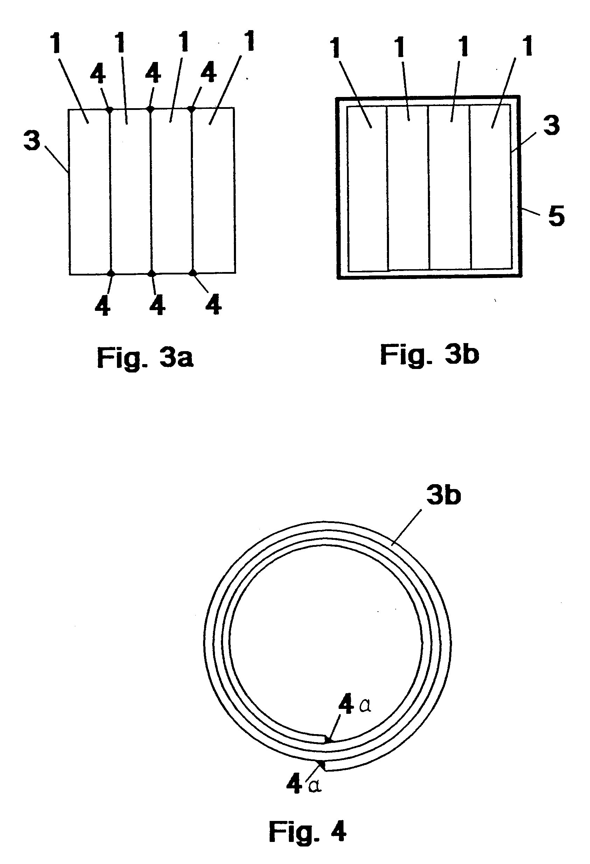

Fig.3 a zeigt ein Beispiel des Verfahrens, bei dem die nach außen führenden Berührungskanten 4 der Flachprodukte 1 allseitig miteinander verschweißt sind. Dabei kann dieser Verschweißvorgang entweder unter einem geeigneten Schutzgas oder Vakuum erfolgen.
   Die zwischen den Blechprofilen vorhandenen Totvolumina müssen nach dem Schweißvorgang evakuiert bzw. mit einem solchen, im Material beim nachfolgenden Diffusionsverschweißprozesses ohne Schaden löslichen Gas gefüllt sein.
Fig. 3 b zeigt ein anderes Beispiel, bei dem das gesamte Blechpaket 3 in eine gasdichte und verformbare Hülle 5 eingesetzt ist, ähnlich wie dies beim heißisostatischen Verpressen von Pulvern oder beim Pulverschmieden der Fall ist.
Fig. 4 zeigt die Herstellung eines Ringes 3 baus einem Flachprodukt welches über mehrere Lagen zu einem Teil mit gewünschtem Innen- und Außendurchmesser aufgewickelt ist. Dabei war das Coil vorgängig in einem Wärmebehandlungsofen aufgestickt worden, wobei es zu diesem Zwecke in locker gewickelter Form in den Ofen eingebracht worden war, um den Zutritt der aufstickenden Atmosphäre z. B. in der Form von Formiergas zu erleichtern. Die Anfangs- und Endkanten des Coils werden dabei jeweils mit Schweißungen 4a gegen die anliegende Windung gasdicht verschweißt, desgleichen die spiral förmigen stirnseitigen Verbindungskanten der einzelnen Windungen, was im vorliegenden Bild nicht gezeigt ist. Anstelle der Aufwicklung eines Flachproduktes kann ein solcher Ring auch aus einer Abfolge ineinander sitzender konzentrischer Ringe bestehen. Zur Verschweißung wird das Coil in eine gasdichte Kapsel eingesetzt, in der die Coilwindungen heißisostatisch zu einem kompakten Ringkörper diffusionsverschweißt werden. Alternativ kann ein solches Coil unter Schutzgas in einem Ringwalzwerk zu einem kompakten Ring verwalzt werden. Nicht rotationssymmetrische Bauteile können entsprechend im Gesenk verschmiedet werden.

Von besonderem Interesse kann es auch sein, Schichtverbundwerkstoffe aus verschiedenen Blechmaterialien zusammenzusetzen, wobei im diffusionsverschweißten Werkstück lokale Eigenschaften entstehen, welche für den Verwendungszweck besonders günstig sind. Beispielsweise können die an der Oberfläche vorhandenen Schichten besonders günstige Korrosions- oder Härteeigenschaften aufweisen. Dies ist entweder dadurch zu erreichen, daß Bleche mit grundsätzlich verschiedener Legierungszusammensetzung verwendet werden oder indem man Bleche gleicher Grundzusammensetzung auf verschiedene Metalloid-Gehalte auflegiert.

Dazu kann ein Metalloid z. B. Stickstoff, in unterschiedlichen Konzentrationen für die einzelnen Lagen verwendet werden. Oder es werden die Metalloide Stickstoff, Bor und Kohlenstoff beliebig kombiniert.

Selbstverständlich können auch Bleche verschiedener Dicke miteinander diffusionsverschweißt werden, was bei gleicher Stickstoffbehandlung z. B. zu unterschiedlichen Konzentrationsprofilen in den Blechen führt.

Ein weiterer Vorteil dieses Verfahrens ist sein "Near Net Shape"-Charakter. In Funktion der späteren Form können Blechprofile mit unterschiedlichen Dicken und Gestaltungsformen zu Bündeln zusammengefaßt werden, welche die Erreichung der Endform nach dem Diffusionsverschweißungsprozess mit einem Minimum an Nachbearbeitung gestatten.

Gegenüber der Schmelz- und Pulvermetallurgie besitzt das vorliegende Verfahren große Vorteile. Gegenüber der Schmelzmetallurgie umgeht das Verfahren zusammen mit der Pulvermetallurgie alle Nachteile, die bei der Erstarrung einer Metall-Legierung auftreten können, wie Seigerungen, Lunker, Poren und unerwünschte Ausscheidungen. Gegenüber der Pulvermetallurgie besteht aber der entscheidende Vorteil, daß die große innere Oberfläche, welche durch die Kornoberflächen gebildet wird, und welche über ihre Verschmutzung z. B. über Oxydation Anlaß zu einem Abfall der Zähigkeit führen kann, in entscheidendem Maße reduziert wird. Ausscheidungen sind zwar auch bei dem vorliegenden Verfahren an der Berührungsfläche zweier Blechprofile möglich, sie sind jedoch lokal beschränkt und können das Zähigkeitsverhalten nicht entscheidend beeinflussen.

Überdies kann die den Blechen eingeprägte Walzstruktur in zusätzlicher Weise das Werkstoffverhalten des daraus gebildeten Laminats in günstiger Weise beeinflussen.

### Beispiel 1

Ein 4 mm-Blech aus einem 13-%igen Chromstahl wird bei 1150°C in einer Formiergasatmosphäre (92% Stickstoff, Rest Wasserstoff) während 24 h geglüht. Ausgehend von einem Anfangsgehalt von 0,07 Gew.-% Stickstoff, beträgt der Stickstoffgehalt dann im Zentrum 0,13 Gew.-%, in der Randzone 0,38 Gew.-%. Werden nun 20 solcher Bleche in einem Bündel zusammengefaßt und in einer gasdichten Kapsel, welche mit Stickstoff bei Normaldruck gefüllt ist, heißisostatisch während 4 Stunden bei 1150°C verpresst, so entsteht ein massiver Block, der aus einer Abfolge von Zonen erhöhter und niedriger Festigkeit besteht und neben seiner hohen Gesamtfestigkeit ein günstiges Zähigkeitsverhalten zeigt, indem Risse durch die Abfolge der wechselnden mechanischen Zonen gestoppt werden.

### Beispiel 2

Zur Herstellung eines Kappenrings aus Chrom-Mangan-Stickstoff-Stahl mit den verlangten Endabmessungen: Außendurchmesser 790 mm, Innendurchmesser 550 mm und einer Höhe von 600 mm nach dem erfindungsgemäßen Verfahren wurde wie folgt vorgegangen:
Aus einem im Elektrolichtbogenofen erschmolzenen Stahl mit der Analyse:

| | |
|---|---|
| Kohlenstoff | 0,09 Gew.-%, |
| Silizium | 0,45 Gew.-%, |
| Mangan | 18,90 Gew.-%, |
| Chrom | 18,30 Gew.-%, |
| Nickel | 0,47 Gew.-%, |
| Stickstoff | 0,48 Gew.-% |

wurde ein 6-Tonnen-Block gegossen und zu einem 3 mm dicken Band ausgewalzt. Dieses Band wurde anschließend auf eine Breite von 610 mm besäumt und gebeizt wird.
Das Band hatte im Walzzustand eine Zug-Festigkeit von 767 N/mm².

Das Band wurde dann in einem Wärmebehandlungsofen in stickstoffhaltiger Atmosphäre (Formiergas) durchgehend auf Stickstoffgehalte von 1,17 % aufgestickt. Mit diesen Stickstoffgehalten wurde die Zug-Festigkeit auf 1225 N/mm² gesteigert.

Das so verfestigte Band wurde zu einem Coil aufgewickelt, das mit einem geringen Überschuß die Endkonturen des Kappenrings aufwies. Die Anfangs- und Endkanten des so gewickelten Coils wurden verschweißt, desgleichen auch die spiralförmigen stirnseitigen Verbindungskanten der einzelnen Windungen.

Das Coil wurde dann in eine heißisostatische Presse eingesetzt und dort für einen Zeitraum von 4 h bei 1150 °C und einem Gasdruck (Argon-Gas) von 1000 bar zu einem kompakten Ringkörper diffusionsverschweißt.

Der Ringkörper wurde anschließend auf Fertigmaße bearbeitet. Über die Breite des Ringes entnommene Proben ergaben, daß die Festigkeitswerte völlig gleichmäßig in einem Bereich von 1223 bis 1229 N/mm² lagen, somit der Ausgangswert des Vorbandes mit 1225 N/mm² voll getroffen wurde. Eine Anisotropie der Werkstoffeigenschaften über die Breite des Ringes konnte nicht festgestellt werden.

Ein in der oben beschriebenen Weise hergestellter zweiter Kappenring wurde zur Erreichung noch höherer Festigkeiten nach dem heißisostatischen Verpressen zusätzlich kalt aufgeweitet. Die Festigkeit des Ringes wurde dabei auf 1690 N/mm² gesteigert. Durch stärkeres Kaltaufweiten sind noch höhere Festigkeitssteigerungen bis 2000 N/mm² möglich.

Grundsätzlich wird jedoch gemäß der Erfindung bevorzugt der Ring ohne Kaltaufweiten hergestellt, d. h. es werden die verlangten Festigkeitswerte allein durch die Aufstickungsbehandlungen eingestellt. Selbstverständlich ist auch bei dieser Arbeitsweise die Methode des Kaltaufweitens eine Möglichkeit, die Endfestigkeit noch nach oben zu korrigieren.

## Patentansprüche

1. Verfahren zur Herstellung eines hochfesten und zähen metallischen Schichtverbundwerkstoffes aus mehreren miteinander durch Diffusionsverschweißen verbundenen Stahlschichten,
**dadurch gekennzeichnet,** daß die Stahlschichten aus einem Stahl gewalzte Flachprodukte sind, die vor dem Diffusionsverschweißen durch eine Wärmebehandlung in einer ein Metalloid aus der Gruppe Stickstoff, Bor, Kohlenstoff enthaltenden Gasatmosphäre mit dem Metalloid derart auflegiert werden, daß es nur interstitiell in Lösung geht.

2. Verfahren nach Anspruch 1,
**dadurch gekennzeichnet,** daß die Wärmebehandlung in der das Metalloid enthaltenden Gasatmosphäre so geführt wird, daß sich durchgehend über den gesamten Querschnitt der Flachprodukte eine gleichbleibende Metalloidkonzentration einstellt.

3. Verfahren nach Anspruch 1,
**dadurch gekennzeichnet,**
daß die Wärmebehandlung in der das Metalloid enthaltenden Gasatmosphäre so geführt wird, daß sich über den Querschnitt der Flachprodukte ein vom Rand zum Inneren hin abfallendes Konzentrationsprofil des Metalloids einstellt.

4. Verfahren nach den Ansprüchen 1 bis 3,
**dadurch gekennzeichnet,**
daß das Metalloid Stickstoff durch eine Aufstickungsbehandlung in einer stickstoffhaltigen Gasatmosphäre bei Temperaturen von 500 bis 1 300 °C über einen Zeitraum von 0,5 bis 30 Stunden in Gehalten von 0,1 bis 3,0 Gew.-% in die Flachprodukte eingebracht wird, wobei bei über der Stickstofflöslichkeit des jeweiligen Metalls bei Normaldruck liegenden Stickstoffgehalten die Gasatmosphäre in einem Druckofen unter einem Druck bis 300 bar gehalten wird.

5. Verfahren nach den Ansprüchen 1 bis 4,
**dadurch gekennzeichnet,**
daß das Metalloid Bor in einer Bor-Halogenide enthaltenden Gasatmosphäre bei 800 bis 1 100 °C über einen Zeitraum von 0,1 bis 15 Stunden in Gehalten von 0,02 bis 0,20 Gew.-% in die Flachprodukte eingebracht wird.

6. Verfahren nach einem der Ansprüche 1 bis 3,
**dadurch gekennzeichnet,**
daß das Metalloid Kohlenstoff in einer CO und/oder CH₄ enthaltenden Atmosphäre über einen Zeitraum von 0,5 bis 50 Stunden bei Temperaturen von 800 bis 1 300 °C in Gehalten von 0,1 bis 2,0 Gew.-% in die Flachprodukte eingebracht wird.

7. Verfahren nach einem der Ansprüche 1 bis 6,
**dadurch gekennzeichnet,**
daß die mit dem Metalloid auflegierten Flachprodukte nach dem Verfahren des heißisostatischen Pressens (HIP-Verfahren) miteinander zu einem kompakten metallischen Schichtverbundkörper diffusionsverschweißt werden.

8. Verfahren nach Anspruch 7,
**dadurch gekennzeichnet,**
daß die Flachprodukte vor dem heißisostatischen Verpressen an ihren Berührungskanten miteinander gasdicht verschweißt werden und das zwischen den Flachprodukten verbleibende Totvolumen mit einem während des Verdichtungsvorgangs im Werkstoff löslichen Gas gefüllt wird, das mit dem beim Einbringen des Metalloids in die Flachprodukte verwendeten Gas identisch ist.

9. Verfahren nach den Ansprüchen 7 und 8,
**dadurch gekennzeichnet,**
daß das Totvolumen der die Flachprodukte umgebenden gasdichten, verformbaren und von außen unter hoher Temperatur mit Druckgas beaufschlagten Hülle vor dem heißisostatischen Verpressen mit einem während des Verdichtungsvorgangs im Werkstoff löslichen Gas gefüllt wird, das mit dem beim Einbringen des Metalloids in die Flachprodukte verwendeten Gas identisch ist.

10. Verfahren nach einem der Ansprüche 1 bis 9 zur Herstellung eines hochfesten zylinderförmigen metallischen Ringkörpers in Schichtverbundbauweise,
**dadurch gekennzeichnet,**
daß
- zunächst aus einem gut verformbaren Metall niedriger Festigkeit ein Metallband geringer Dicke gewalzt,
- das Metallband dann durch Wärmebehandlung in einer das Metalloid enthaltenden Gasatmosphäre mit dem Metalloid auf die gewünschte Festigkeit auflegiert und
- zu einem die Konturen des Ringkörpers umfassenden Coil aufgewickelt wird, und
- die Windungen des Coils abschließend heißisostatisch miteinander zum Ringkörper diffusionsverschweißt werden.

11. Verfahren nach Anspruch 10 zur Herstellung eines hochfesten Chrom-Mangan-Stahl-Kappenringes für Generatoren,
**dadurch gekennzeichnet,**
daß
- zunächst aus einem Stahl der Analyse
| | |
|---|---|
| Kohlenstoff | max 0,12 Gew.-% |
| Silizium | 0,2 bis 1,0 Gew.-% |
| Mangan | 17,5 bis 20,5 Gew.-% |
| Chrom | 17,5 bis 20,5 Gew.-% |
| Nickel | max. 1,0 Gew.-% |
| Stickstoff | max. 0,6 Gew.-% |
ein Stahlband von 2 bis 5 mm Dicke mit einer Festigkeit von 720 bis 830 N/mm² gewalzt,
- das Stahlband dann mittels einer Wärmebehandlung in stickstoffhaltiger Atmosphäre durch Stickstoff-Gehalte von 0,6 bis 1,5 Gew.-% auf Festigkeitswerte von 800 bis 2 000 N/mm² gebracht und
- zu einem die Endkonturen des Kappenringes umfassenden Coil aufgewickelt wird, wonach
- die Windungen des Coils heißisostatisch miteinander zum kompakten hochfesten Kappenring verpreßt werden.

## Claims

1. A process for the production of a high strength and tough metal composite material from a number of steel layers connected to one another by diffusion welding, characterized in that the steel layers are flat products rolled from a steel which prior to diffusion welding are so alloyed up with the metalloid by a heat treatment in a gaseous atmosphere containing a metalloid from the group formed by nitrogen, boron and carbon that the metalloid passes only interstitially into solution.

2. A process according to claim 1, characterized in that the heat treatment is so performed in the gaseous atmosphere containing the metalloid that a uniform metalloid concentration is set up throughout over the whole cross-section of the flat products.

3. A process according to claim 1, characterized in that the heat treatment is so performed in the gaseous atmosphere containing the metalloid that a concentration profile of the metalloid which decreases from the edge to the interior is set up over the cross-section of the flat products.

4. A process according to claims 1 to 3, characterized in that the metalloid nitrogen is introduced in contents of 0.1 to 3.0% by weight into the flat products in a nitrogen-containing gaseous atmosphere at temperatures of 500 to 1300°C over a period of 0.5 to 30 hours, the gaseous atmosphere being maintained in a pressure furnace at a pressure of up to 300 bar with nitrogen contents lying above the nitrogen solubility of the particular metal at normal pressure.

5. A process according to claims 1 to 4, characterized in that the metalloid boron is introduced in contents of 0.02 to 0.20% by weight into the flat products in a boron-halide-containing gaseous atmosphere at 800 to 1100°C over a period of 0.1 to 15 hours.

6. A process according to one of claims 1 to 3, characterized in that the metalloid carbon is introduced in contents of 0.1 to 2.0% by weight into the flat products in an atmosphere containing CO and/or CH₄ over a period of 0.5 to 50 hours at temperatures of 800 to 1300°C.

7. A process according to one of claims 1 to 6, characterized in that after the process of hot isostatic pressing (HIP), the flat products alloyed-up with the metalloid are diffusion welded to one another to form a compact metal laminated member.

8. A process according to claim 7, characterized in that prior to the hot isostatic pressing, the flat products are welded gastight to one another at their contacting edges, and the dead volume remaining between the flat products is filled with a gas which is soluble during the densification process in the material and which is identical with the gas used in the introduction of the metalloid into the flat products.

9. A process according to claims 7 and 8, characterized in that prior to the hot isostatic pressing, the dead volume of the gas-tight deformable envelope which encloses the flat products and is acted upon from outside by pressurized gas at elevated temperature is filled with a gas which is soluble during the densification process in the material and which is identical with the gas used in the introduction of the metalloid into the flat products.

10. A process according to one of claims 1 to 9, for the production of a high strength cylindrical metal annular member of composite structure, characterized in that
- first a thin metal strip is rolled from a readily deformable low-strength metal,
- the metal strip is then alloyed up to the required strength with the metalloid by a heat treatment in a gaseous atmosphere containing the metalloid, and
- is wound into a coil enclosing the contours of the annular member, and
- the windings of the coil are finally hot isostatically diffusion welded to one another to give the annular member.

11. A process according to claim 10, for the production of a high strength chromium-magnesium steel cap ring for generators, characterized in that
- first from steel of analysis
| | |
|---|---|
| carbon | max. 0.12 % by weight |
| silicon | 0.2 to 1.0 % by weight |
| manganese | 17.5 to 20.5 % by weight |
| chromium | 17.5 to 20.5 % by weight |
| nickel | max. 1.0 % by weight |
| nitrogen | max. 0.6 % by weight |
the steel strip is rolled which is 2 to 5 mm in thickness and has a strength of 720 to 830 N/mm²,
- a steel strip is then brought by nitrogen contents of 0.6 to 1.5% by weight to strength values of 800 to 2000 N/mm² by a heat treatment in a nitrogen-containing atmosphere, and
- is wound into a coil enclosing the end contours of the cap ring, whereafter
- the windings of the coil are pressed hot isostatically to one another to give the compact high strength cap ring.

## Revendications

1. Procédé pour la fabrication d'un matériau composite tenace et à haute résistance mécanique à partir de plusieurs couches d'acier liées entre elles par soudage par diffusion, procédé caractérisé en ce que les couches d'acier sont des articles plats obtenus par laminage d'un acier et qui, avant le soudage par diffusion, sont soumis à un traitement thermique d'alliage dans une atmosphère gazeuse contenant un métalloïde du groupe de l'azote, du bore et du carbone, traitement réalisé en sorte que ce métalloïde ne forme ensuite qu'une solution interstitielle.

2. Procédé selon la revendication 1, caractérisé en ce que le traitement thermique dans l'atmosphère gazeuse contenant le métalloïde est conduit de manière à obtenir de part en part, sur toute la section de l'article plat, une concentration uniforme en métalloïde.

3. Procédé selon la revendication 1, caractérisé en ce que le traitement thermique dans l'atmosphère gazeuse contenant le métalloïde est conduit de manière à obtenir, le long de la section de l'article plat, un profil de concentration du métalloïde correspondant à une diminution de la concentration depuis le bord vers l'intérieur.

4. Procédé selon l'une quelconque des revendications 1 à 3, caractérisé en ce que l'on introduit dans l'article plat, comme métalloïde, de l'azote avec une teneur comprise entre 0,1 et 3,0 % en poids, à l'aide d'un traitement de nitruration dans une atmosphère gazeuse azotée, à une température comprise entre 500 et 1300°C et pour une durée comprise entre 0,5 et 30 heures, l'atmosphère gazeuse dans le four étant maintenue à une pression allant jusqu'à 300 bars pour obtenir des teneurs en azote supérieures à la limite de solubilité de l'azote à pression normale dans le matériau concerné.

5. Procédé selon l'une quelconque des revendications 1 à 4, caractérisé en ce que l'on introduit dans le produit plat, comme métalloïde, du bore avec une teneur comprise entre 0,02 et 0,20 % en poids, à l'aide d'une atmosphère gazeuse contenant des halogénures de bore, à une température comprise entre 800 et 1100°C et pour une durée comprise entre 0,1 et 15 heures.

6. Procédé selon l'une quelconque des revendications 1 à 3, caractérisé en ce que l'on introduit dans le produit plat, comme métalloïde, du carbone avec une teneur comprise entre 0,1 et 2,0 % en poids, à l'aide d'une atmosphère gazeuse contenant CO et/ou CH₄, à une température comprise entre 800 et 1300°C et pour une durée comprise entre 0,5 et 50 heures.

7. Procédé selon l'une quelconque des revendications 1 à 6, caractérisé en ce que les articles plats alliés avec le métalloïde, après l'opération de pressage isostatique à chaud (procédé HIP), sont soudés ensemble par diffusion pour former un corps compact d'un composite métallique multicouches.

8. Procédé selon la revendication 7, caractérisé en ce que les articles plats sont soudés le long de leurs bords en contact, avant le pressage isostatique à chaud, avec une soudure étanche, et que le volume mort restant entre les articles plats est rempli avec un gaz soluble dans le matèriau lors du processus de densification et qui est identique au gaz utilisé lors de l'introduction du métalloïde dans les articles plats.

9. Procédé selon les revendications 7 et 8, caractérisé en ce que l'on remplit, avant le pressage isostatique à chaud, le volume mort dans l'enveloppe étanche déformable entourant les articles plats et soumise sur sa paroi extérieure à la pression d'un gaz à température élevée, avec un gaz soluble dans le matériau lors du processus de densification et qui est identique au gaz utilisé lors de l'introduction du métalloïde dans les articles plats.

10. Procédé selon l'une quelconque des revendications 1 à 9, pour la fabrication d'un anneau de chape métallique de forme cylindrique et à haute résistance, selon un mode de construction composite, caractérisé en ce que le procédé comprend les étapes suivantes :
- on réalise par laminage d'un métal aisément déformable et de résistance faible, un ruban métallique de faible épaisseur,
- on allie le ruban métallique avec un métalloïde, pour obtenir la résistance souhaitée, en le soumettant à un traitement thermique dans une atmosphère gazeuse contenant le métalloïde,
- on enroule le ruban pour former un rouleau dont les dimensions englobent les contours de l'anneau de chape,
- on soude ensuite ensemble par diffusion les enroulements du rouleau, par pressage isostatique à chaud, pour former l'anneau.

11. Procédé selon la revendication 10 pour la fabrication d'un anneau de chape en acier au chrome-manganèse à haute résistance, pour une utilisation dans des générateurs, procédé caractérisé en ce que :
- on réalise d'abord un ruban de 2 à 5 mm d'épaisseur et ayant une résistance à la rupture comprise entre 720 et 830 N/mm², par laminage d'un acier ayant la composition :
carbone moins de 0,12 % en poids,
silicium entre 0,2 et 1,0 % en poids,
manganèse entre 17,5 et 20,5 % en poids,
chromeentre 17,5 et 20,5 % en poids,
nickel moins de 1,0 % en poids,
azote moins de 0,6 % en poids,
- au moyen d'un traitement thermique dans une atmosphère gazeuse azotée, on confère au ruban d'acier une teneur en azote comprise entre 0,6 et 1,5 % en poids, pour lui permettre d'atteindre une résistance à la rupture comprise entre 800 et 2000 N/mm²,
- le ruban d'acier est ensuite enroulé pour former un rouleau dont les dimensions englobent les contours de l'anneau de chape,
- on assemble ensuite les enroulements du rouleau, par pressage isostatique à chaud, pour former l'anneau compact à haute résistance.
